(19) Europäisches Patentamt
European Patent Office
Office européen des brevets

(11) Veröffentlichungsnummer: **0 259 654**
**B1**

(12) # EUROPÄISCHE PATENTSCHRIFT

(45) Veröffentlichungstag der Patentschrift: **06.12.89**

(51) Int. Cl.[4]: **C08F 8/44**, C08F 8/32, C03C 17/32

(21) Anmeldenummer: **87111887.3**

(22) Anmeldetag: **17.08.87**

(54) **Modifiziertes Polyethylen, Verfahren zu seiner Herstellung und Verwendung des modifizierten Polyethylens zur Vergütung der äusseren Oberflächen von Glasbehältern.**

(30) Priorität: **27.08.86 DE 3629149**

(43) Veröffentlichungstag der Anmeldung: **16.03.88 Patentblatt 88/11**

(45) Bekanntmachung des Hinweises auf die Patenterteilung: **06.12.89 Patentblatt 89/49**

(84) Benannte Vertragsstaaten: **AT BE CH DE ES FR GB IT LI LU NL SE**

(56) Entgegenhaltungen:
**DE-A-1 495 137**
**DE-B-1 291 448**
**FR-A-2 107 538**

(73) Patentinhaber: **Th. Goldschmidt AG, Goldschmidtstrasse 100 Postfach 101461, D-4300 Essen 1(DE)**

(72) Erfinder: **Ruf, Erich, Dr., Auf'm Gartenstück 10, D-4300 Essen(DE)**

**EP 0 259 654 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Polyethylen mit seitenständig gebundenen Gruppen, welche von Säureamiden abgeleitet sind und endständig Betainstruktur aufweisen. Die Erfindung betrifft ferner ein Verfahren zur Herstellung eines in solcher Weise modifizierten Polyethylens sowie die Verwendung des modifizierten Polyethylens zur Vergütung von Glasoberflächen, insbesondere der äußeren Oberfläche von Glasbehältern.

Die Erfindung betrifft insbesondere die Verwendung des erfindungsgemäß modifizierten Polyethylens für die Nachvergütung von Glasoberflächen, welche eine dünne Oberflächenschicht von Metalloxiden, z.B. Zinnoxiden, aufweisen (sogenannte Heißendvergütung), mit wäßrigen Dispersionen des erfindungsgemäß modifizierten Polyethylens (sogenannte Kaltendvergütung) zur Verbesserung der Glätte der Oberflächen und zur Erhöhung ihrer Kratzfestigkeit.

Die Festigkeit von Glas hängt von der Unversehrtheit der Glasoberfläche ab. Unmittelbar nach Herstellung des Glases ist seine Festigkeit am höchsten. Die Festigkeit sinkt jedoch, wenn die Glasoberfläche Kratzer oder Schrammen aufweist. Es sind deshalb zahlreiche Verfahren bekannt, die Oberfläche von Gegenständen aus Glas gegen mechanische Beschädigungen zu schützen.

So ist es bekannt, Glasgegenstände direkt nach ihrer Formgebung bei Temperaturen zwischen etwa 370 und 750°C mit anorganischen oder organischen Verbindungen des Titans, Zinns oder Zirkons, zu behandeln (sogenannte Heißendvergütung). Dabei entstehen auf der Oberfläche der heißvergüteten Glasgegenstände dünne, farblose, transparente Metalloxidüberzüge.

Zur weiteren Erhöhung der Ritzhärte, der Festigkeit und insbesondere der Glätte von Glasgegenständen ist es bekannt, auf die mit Metalloxiden vergüteten Glasgegenstände noch einen organischen Überzug aufzubringen.

Aus der umfangreichen Patentliteratur werden zum Stand der Technik folgende Patentschriften genannt:

In der DE-PS 12 91 448 ist ein Verfahren zur Erhöhung der Ritzhärte und Festigkeit von Glasgegenständen, insbesondere Glasflaschen, durch Erzeugung eines dünnen, farblosen, durchsichtigen Überzuges auf den Außenflächen der Glasgegenstände beschrieben, dessen Merkmal darin besteht, daß auf die Glasgegenstände aufgebrachte dünne Schichten eines pyrolysierbaren anorganischen Salzes oder einer pyrolysierbaren organischen Verbindung des Titans, Zirkoniums, Zinns oder Vanadiums auf den Glasgegenständen bei Temperaturen zwischen 370 und 705°C pyrolytisch zu den entsprechenden Metalloxiden zersetzt, die Glasgegenstände auf Temperaturen zwischen 230 und 65,5°C abgekühlt und auf die noch heißen Glasoberflächen ein Olefinpolymerisat, ein Polyurethan, ein Polystyrol oder ein Essigsäuresalz eines Alkylamins aufgesprüht werden. Beispiel eines Olefinpolymerisates ist ein Polyethylenwachs niedrigen Molekulargewichts, welches in Form einer wäßrigen Emulsion verwendet wird. Als Emulgator dient das Alkalimetallsalz einer Fettsäure, insbesondere Kaliumoleat. Die Dicke des Überzuges auf dem Glasgegenstand beträgt etwa 1 µm. Diese Filme aus Polyethylenwachs sind jedoch nicht waschlaugenbeständig und werden bei einer Reinigung des Behälters nach verhältnismäßig kurzer Zeit durch die waschaktiven Substanzen der heißen Reinigungsflotte abgelöst.

Aus der DE-PS 12 98 681 ist ein Verfahren zum Überziehen von Glasgegenständen mit einer verschleißfesten und gleitfähigen Schicht bekannt. Dieses Verfahren ist dadurch gekennzeichnet, daß auf die Oberfläche des Glasgegenstandes eine wäßrige Lösung aus einem Umsetzungs produkt von Polyvinylalkohol, einem emulgierten Polyolefin, vorzugsweise emulgierten Polyethylen, und einer sauren Verbindung aufgebracht wird.

Die DE-PS 15 96 742 betrifft ein Verfahren zur Herstellung dauerhafter, glatter Überzüge auf Glaskörpern, bei dem der Überzug auf die auf 70 bis 225°C erwärmten Glaskörper aus einer Mischung eines dispergierten Polyolefins und eines Polyoxyethylenderivates einer Fettsäure aufgebracht wird. Das disperse Polyolefin ist vorzugsweise Polyethylen. Als Polyoxyethylenderivat einer Fettsäure wird vorzugsweise Polyoxyethylenmonostearat verwendet.

Aus der DE-PS 24 32 478 ist ein Glasbehälter mit einem Überzug aus einem ionischen Copolymer zwischen einem α-Olefin und einer α,β-ethylenischen ungesättigten Carbonsäure bekannt, wobei der Glasbehälterzusätzlich einen Gleitüberzug mit in Gewichtsteilen folgenden Bestandteilen aufweist:

1 Teil mindestens eines der folgenden Salze: Calciumstearat, Zinkstearat, Calciumoleat, Zinkoleat; 0,5 bis 2 Teile eines löslichen Polyvinylalkohols und 1,7 bis 3,6 Teile mindestens eines der folgenden Oleate: Kaliumoleat, Natriumoleat und Ammoniumoleat.

Diese aus dem Stand der Technik bekannten Beschichtungsmaterialien sind jedoch noch nicht in der Lage, alle Anforderungen zu erfüllen, die an ein Überzugsmittel für Glasoberflächen zu stellen sind. Diese Überzüge müssen insbesondere folgende Forderungen erfüllen:

Die Überzüge sollen die Glasoberfläche wirksam vor mechanischen Beschädigungen schützen, wie sie beispielsweise auftreten, wenn die Glasbehälter bei der Reinigung, Abfüllung oder Verpackung aneinanderreiben oder mit Metallflächen der Reinigungs-, Abfüll- oder Verpakkungsmaschinen in reibende Berührung kommen.

Die Überzüge müssen eine größere Anzahl von Reinigungs- und Waschvorgängen, z.B. in Spülmaschinen, überstehen. Die Überzüge müssen also insbesondere gegen den Angriff heißer, wäßriger Waschflotten beständig sein.

Die Überzüge müssen einen guten Gleitwert aufweisen, damit die behandelten Glasbehälter gut handhabbar sind.

Die Überzüge sollen auf den Glasoberflächen möglichst gut haften, damit sie bei punktueller Beschädigung nicht ohne weiteres von der Glasoberfläche abgezogen werden können.

Etiketten, insbesondere Etiketten mit selbstklebender Beschichtung, müssen auf den Überzügen der Beschichtung ausreichend fest haften, damit die Etikettierfähigkeit der behandelten Glasbehälter gewährleistet bleibt.

Die Überzüge müssen physiologisch unbedenklich sein, da die Mehrzahl von derartige Überzüge aufweisenden Glasbehältern zur Verpackung von Lebensmitteln oder Getränken dient.

Schließlich sollen die Überzüge den Endpreis der behandelten Glaswaren nicht wesentlich erhöhen.

Der Erfindung liegt die Aufgabe zugrunde, ein Überzugsmittel zu finden, welches die vorstehend genannten Anforderungen möglichst optimal erfüllt. Dabei soll das Überzugsmittel vorzugsweise in Form einer wäßrigen Dispersion auf die Glasoberfläche aufgebracht werden können. Vorzugsweise soll das Überzugsmittel auf Glasbehälter aufgebracht werden, welche zuvor mit metallorganischen Verbindungen unter Ausbildung einer Metalloxidschicht heißvergütet worden sind und noch eine Temperatur von etwa 50 bis 150°C aufweisen (Kaltendvergütung).

Überraschend wurde nun gefunden, daß ein in bestimmter Weise modifiziertes Polyethylen Überzüge des gewünschten Eigenschaftsprofiles herzustellen gestattet.

Gegenstand der Erfindung ist deshalb Polyethylen mit einem mittleren Molekulargewicht von 500 bis 10 000 mit einer oder mehreren seiten ständig gebundenen Gruppe(n) der Formel

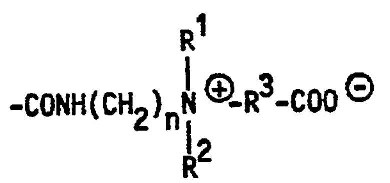 I

wobei $R^1$ und $R^2$ gleich oder verschieden sind und eine niedere Alkylgruppe mit 1 bis 4 Kohlenstoffatomen bedeuten, $R^3$ ein zweiwertiger Alkylenrest und n = 2 oder 3 ist.

Vorzugsweise weist das modifizierte Polyethylen ein mittleres Molekulargewicht von 1000 bis 5000 auf. Das durchschnittliche polymere Molekül soll dabei 1 bis 10, vorzugsweise 1 bis 5 seitenständig gebundene Gruppen der Formel I aufweisen.

Die Reste $R^1$ und $R^2$ können gleich oder verschieden sein. Sie sind aber vorzugsweise gleich. Sie können eine Methyl-, Ethyl-, Propyl-, Isopropyl-, Butyl- oder Isobutylgruppe bedeuten. Vorzugsweise haben $R^1$ und $R^2$ jeweils die Bedeutung einer Methylgruppe.

$R^3$ ist ein zweiwertiger Alkylenrest, vorzugsweise der Rest $-CH_2-$, $-(CH_2)_2-$ oder $-(CH_2)_3-$.

Der Index n ist vorzugsweise 3.

Das Polyethylen weist vorzugsweise 1 bis 10 seitenständig gebundene Gruppen der Formel I auf.

Ein weiterer Gegenstand der Erfindung besteht in dem Verfahren zur Herstellung des erfindungsgemäß modifizierten Polyethylens. Dieses Verfahren ist dadurch gekennzeichnet, daß man Polyethylen mit einem mittleren Molekulargewicht von 500 bis 10 000 mit einer oder mehreren seitenständig gebundenen Gruppe(n) der Formel

$-CONH(CH_2)_nNR^1R^2$ II

wobei $R^1$, $R^2$ und n wie oben definiert sind, auf eine Temperatur oberhalb der Schmelztemperatur erwärmt, in auf 70 bis 95°C erwärmtes Wasser, welches in bezug auf die Gruppe $-NR^1R^2$ mindestens äquimolare Mengen einer Verbindung $XR^3COOY$, wobei X ein Halogenrest und Y ein Alkali- oder Ammoniumion ist, enthält, einlaufen läßt, das Reaktionsgemisch 2 bis 5 Stunden bei einer Temperatur von 60 bis 90°C beläßt, sodann die Dispersion unter Rühren abkühlt und anschließend gegebenenfalls das modifizierte Polyethylen aus der Dispersion abtrennt. X ist vorzugsweise ein Chlorrest, Y vorzugsweise ein Natrium-, Kalium- oder Ammoniumion.

Polyethylen mit einem mittleren Molekulargewicht von 500 bis 10 000 mit einer oder mehreren seitenständig gebundenen Gruppe(n) der Formel II kann in einem hier nicht beanspruchten Verfahren dadurch erhalten werden, daß man anoxidiertes und gegebenenfalls verestertes Polyethylen des vorgegebenen Molekulargewichtsbereichs aufschmilzt und mit mindestens äquimolaren Mengen eines Amins der allgemeinen Formel

$H_2N(CH_2)_nNR^1R^2$ III

$R^1$, $R^2$, n wie oben definiert, bei Temperaturen von 150 bis 200°C und einer Reaktionszeit von 1 bis 8 Stunden umsetzt, gegebenenfalls anschließend im Produkt verbliebenes Reaktionswasser oder durch Esterspaltung freigesetzten Alkohol und nicht umgesetztes Amin bei vermindertem Druck abdestilliert.

Hierzu wird vorzugsweise ein anoxidiertes und gegebenenfalls verestertes Polyethylen mit einer Säurezahl von 20 bis 40, insbesondere von 20 bis 30, und einer Verseifungszahl von 20 bis 70, insbesondere von 40 bis 60, verwendet.

Ein weiterer Gegenstand der Erfindung besteht in der Verwendung des erfindungsgemäß modifizierten Polyethylens zur Vergütung der äußeren Oberfläche von Glasbehältern.

Das erfindungsgemäß modifizierte Polyethylen ergibt auf Glasoberflächen glatte Überzüge mit hervorragenden Gleitwerten. Die Überzüge haften ausgezeichnet auf Glasoberflächen und sind deshalb besonders zur Nachvergütung von Altflaschen (Mehrwegflaschen) geeignet.

Die Überzüge sind gegen mehrfache Einwirkung heißer, wäßriger Waschflotten stabil und behalten insbesondere ihre Glätte.

Die mit den Überzügen versehenen Glasbehälter können in üblicher Weise etikettiert werden.

Die besondere Glättewirkung des erfindungsgemäß modifizierten Polyethylens zeigt sich auch darin, daß Glasbehälter mit einer vorhandenen Heißendvergütung nach Eintauchen in auf Raumtemperatur befindliche Polyethylendispersionen bzw. nach Aufsprühen solcher Dispersionen auf Glasbehälter, auch in nassem Zustand bzw. bei Einwirkung von Kondenswasser auf die beschichteten Glasoberflächen, noch eine gute Glättewirkung aufweisen, was bei anderen Kaltendvergütungsmitteln auf

Basis nichtmodifizierten Polyethylens erst nach Antrocknen solcher Schichten der Fall ist.

Das erfindungsgemäß modifizierte Polyethylen wird zur Bildung des Überzuges in der Regel in Form einer wäßrigen Dispersion auf die Glasoberfläche aufgebracht und auf dieser getrocknet. Das Aufbringen der Polyethylendispersion erfolgt meist im Anschluß an eine Heißendvergütung unter Ausnutzung der Restwärme der zu vergütenden Glasbehälter bei einer Glastemperatur von 50 bis 150°C. Die Dispersion wird dabei auf die Oberfläche gesprüht. Es ist auch möglich, die Glasbehälter in die Dispersion einzutauchen.

Zur Herstellung geeigneter Dispersionen aus dem erfindungsgemäß modifizierten Polyethylen kann man die aus dem Stand der Technik bekannten Dispergierhilfsmittel verwenden. Geeignete Dispergierhilfsmittel sind wasserlösliche Anlagerungsprodukte von Ethylenoxid an Fettalkohole oder Alkylphenole.

Als besonders brauchbar haben sich als Dispergierhilfsmittel jedoch solche grenzflächenaktiven Verbindungen erwiesen, welche als hydrophile Gruppen Betain- oder Aminoxidgruppen und als hydrophobe Gruppen langkettige Alkylreste aufweisen.

Beispiel eines solchen geeigneten Betains ist eine Verbindung der allgemeinen Formel

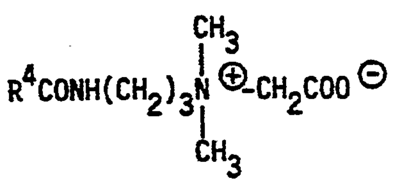 IV

wobei $R^4$ ein langkettiger, von einer Fettsäure abgeleiteter Alkylrest mit im Mittel 7 bis 17 Kohlenstoffatomen ist.

In ähnlicher Weise eignet sich als Dispergierhilfsmittel ein Aminoxid der folgenden allgemeinen Formel

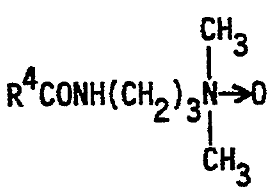 V

$R^4$ ist dabei wie oben definiert.

Derartige Betaine und Aminoxide sind aus dem Stand der Technik bekannt.

Zur Vergütung von Glasoberflächen können die bei dem erfindungsgemäßen Verfahren entstehenden Dispersionen des modifizierten Polyethylens direkt oder nach Verdünnung auf 0,1 Gew.-% verwendet werden.

Die unter Verwendung der Betaine der Formel IV bzw. der Aminoxide der Formel V hergestellten Dispersionen sind gegenüber den Härtebildnern des Wassers unempfindlich.

In dem folgenden Beispiel wird die Herstellung des erfindungsgemäß modifizierten Polyethylens, die Zubereitung einer wäßrigen Dispersion dieses modifizierten Polyethylens und die Verwendung dieser Dispersion für die Kaltendvergütung gezeigt.

In einem 2-1-Vierhalskolben mit Rührer, Thermometer, Destillationsbrücke, Vorlage und Tropftrichter werden 800 g eines Polyethylenwachses mit einer Verseifungszahl von ca. 40 bis 60 aufgeschmolzen und bei einer Temperatur von 120°C über einen Tropftricher mit 100 g Dimethylaminopropylamin zügig unter Rühren versetzt.

Im Anschluß daran wird die Reaktionsmischung unter Rühren ca. 4 bis 5 Stunden auf ca. 170°C erhitzt. Anschließend werden unter Wasserstrahlvakuum unter weiterem Rühren (Produkttemperatur ca. 170°C) aus der Umsetzung erhaltenes Reaktionswasser bzw. Alkohol und überschüssiges Amin abdestilliert. Es werden ca. 874 g amidopropyldimethylaminogruppenhaltiges Polyethylen erhalten.

In einem 1-l-Glaskolben mit Rührer, Thermometer, Rückflußkühler und beheizbarem Tropftricher wird eine Mischung aus 356,8 g Wasser, 8,0 g Chlornatriumacetat, 2,0 g Essigsäure und 60,0 g einer 30 gew.-%igen Lösung von Kokosfettsäureamidopropylbetain auf 90°C erwärmt. 71,5 g des modifizierten Polyethylens werden aufgeschmolzen und zu der wäßrigen Lösung gegeben. Das Reaktionsgemisch wird ca. 3 Stunden auf 98 bis 99°C gehalten und gerührt. Anschließend wird das Reaktionsgemisch innerhalb von 2 Stunden auf 80°C abgekühlt. Die erhaltene Dispersion wird dann auf etwa 20°C abgekühlt. Der pH-Wert der Dispersion wird mit Essigsäure auf 6 eingestellt.

Zur Durchführung der Vergleichsversuche werden nasse, auf Raumtemperatur befindliche Bierflaschen, die eine Heißendvergütung von 50 ctu (coating thickness unit) ($\approx 1,25 \times 10^{-6}$ cm) aufweisen, eingesetzt.

Als Vergleich dient eine Polyethylendispersion des Standes der Technik:

Anoxidiertes Polyethylen mit einer Verseifungszahl von 40 bis 50 wird mit einem nichtionogenen Emulgator aufgeschmolzen und mit heißem Wasser dispergiert. Die Dispersion enthält 24 % Festkörper.

Die erfindungsgemäße Dispersion und die Vergleichsdispersion werden für die Anwendung mit deionisiertem Wasser im Verhältnis 1 : 50 verdünnt. In diese Dispersion werden die auf Raumtemperatur befindlichen Bierflaschen voll eingetaucht und sofort wieder herausgezogen. Danach werden a) ohne weitere Nachbehandlung und

b) nach Abspülen mit Wasser jeweils Scratch-Testwerte mit Hilfe eines Scratch Resistance Testers bestimmt. Es werden folgende Werte gemessen:

Dispersion mit unmodifiziertem Polyethylen:

a) ohne Nachbehandlung:1 bis 2kg
b) nach Abspülen mit Wasser: 1kg

Dispersion mit erfindungsgemäß modifiziertem Polyethylen:

a) ohne Nachbehandlung:>25 kg
b) nach Abspülen mit Wasser: 25 kg

Diese praxisnah durchgeführten Versuche zeigen, daß das erfindungsgemäß modifizierte Polyethylen eine Naßvergütung von Glasflaschen ermöglicht und die vergütete Glasoberfläche 25fach höhere Belastung ohne Ausbildung von Kratzern oder anderen Oberflächendefekten aushält.

**Patentansprüche**

1. Polyethylen mit einem mittleren Molekulargewicht von 500 bis 10 000 mit einer oder mehreren seitenständig gebundenen Gruppe(n) der Formel

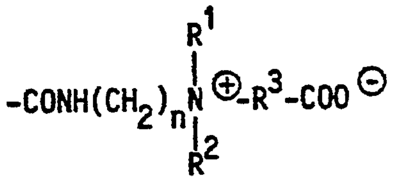

wobei $R^1$ und $R^2$ gleich oder verschieden sind und eine niedere Alkylgruppe mit 1 bis 4 Kohlenstoffatomen bedeuten, $R^3$ ein zweiwertiger Alkylenrest und n = 2 oder 3 ist.

2. Verfahren zur Herstellung des modifizierten Polyethylens nach Anspruch 1, dadurch gekennzeichnet, daß man Polyethylen mit einem mittleren Molekulargewicht von 500 bis 10 000 mit einer oder mehreren seitenständig gebundenen Gruppe(n) der Formel
$-CONH(CH_2)_nNR^1R^2$
wobei $R^1$, $R^2$ und n wie oben definiert sind, auf eine Temperatur oberhalb der Schmelztemperatur erwärmt, in auf 70 bis 95°C erwärmtes Wasser, welches in bezug auf die Gruppe $-NR^1R^2$ mindestens äquimolare Mengen einer Verbindung $XR^3COOY$, wobei X ein Halogenrest und Y ein Alkali- oder Ammoniumion ist, enthält, einlaufen läßt, das Reaktionsgemisch 2 bis 5 Stunden bei einer Temperatur von 60 bis 90°C beläßt, sodann die Dispersion unter Rühren abkühlt und anschließend gegebenenfalls das modifizierte Polyethylen aus der Dispersion abtrennt.

3. Verwendung des modifizierten Polyethylens nach Anspruch 1 zur Vergütung der äußeren Oberflächen von Glasbehältern.

**Claims**

1. Polyethylene with an average molecular weight from 500 to 10,000 having one or more group(s), bonded in lateral positions, of the formula

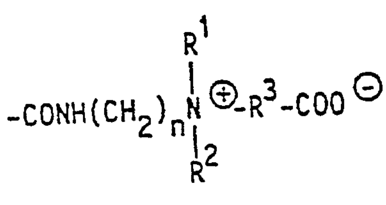

in which $R^1$ and $R^2$ are identical or different and denote a lower alkyl group having 1 to 4 carbon atoms, $R^3$ is a bivalent alkylene radical and n is = 2 or 3.

2. Process for the preparation of the modified polyethylene according to Claim 1, characterized in that polyethylene with an average molecular weight from 500 to 10,000 having one or more group(s), bonded in lateral positions, of the formula
$-CONH(CH_2)_nNR^1R^2$
in which $R^1$, $R^2$ and n are as defined above, is heated to a temperature above the melting temperature and allowed to run into water heated to 70 to 95°C, which in relation to the group $-NR^1R^2$ contains at least equimolar amounts of a compound $XR^3COOY$, in which X is a halogen radical and Y is an alkali metal ion or ammonium ion, the reaction mixture is allowed to remain for 2 to 5 hours at a temperature from 60 to 90°C, the dispersion is then cooled with stirring and subsequently, if desired, the modified polyethylene is separated from the dispersion.

3. Use of the modified polyethylene according to Claim 1 for coating the external surfaces of glass vessels.

**Revendications**

1. Polyéthylène ayant une masse moléculaire moyenne de 500 à 10 000, avec un ou plusieurs groupes à liaison latérale, de formule

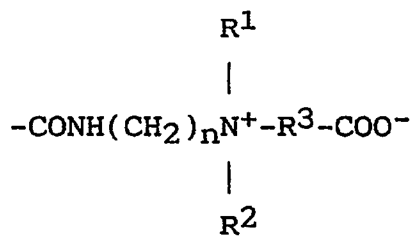

où $R^1$ et $R^2$ sont identiques ou différents, et représentent chacun un groupe alkyle inférieur ayant de 1 à 4 atomes de carbone, $R^3$ est un radical alkylène divalent et n = 2 ou 3.

2. Procédé pour la préparation du polyéthylène modifié selon la revendication 1, caractérisé en ce qu'on chauffe à une température supérieure à la température de fusion un polyéthylène ayant une masse moléculaire moyenne de 500 à 10 000, comportant un ou plusieurs groupes latéraux de formule
$-CONH(CH_2)_nNR^1R^2$
où $R^1$, $R^2$ et n sont comme définis ci-dessus; on l'introduit dans une eau chauffée à 70–95°C, qui contient, par rapport au groupe $-NR^1R^2$, une quantité au moins équimolaire d'un composé $XR^3COOY$, où X est un radical halogéno et Y est un ion métal alcalin ou ammonium; on abandonne le mélange réactionnel pendant 2 à 5 heures à une température 47zde 60 à 90°C; puis on refroidit la dispersion sous agitation et, enfin, on sépare éventuellement de la dispersion le polyéthylène modifié.

3. Utilisation du polyéthylène modifié selon la revendication 1 pour le revêtement de la surface extérieure de récipients en verre.